# EUROPEAN PATENT APPLICATION

(11) **EP 3 094 152 A1**
(43) Date of publication of application: **16.11.2016**
(21) Application number: 14879798.8
(22) Date of filing: 24.01.2014
(51) Int. Cl.: H04W 76/02

(54) **INFORMATION TRANSMISSION METHOD AND DEVICE**

(71) Applicant: Huawei Technologies Co., Ltd., Longgang District Shenzhen, Guangdong 518129 (CN)
(72) Inventor: LIU, Deping, Shenzhen Guangdong 518129 (CN)
(74) Representative: Goddar, Heinz J.
(86) International application number: PCT/CN2014/071366
(87) International publication number: WO 2015/109525

(57) **Abstract**

Embodiments of the present invention disclose an information transmission method and apparatus and relate to the field of communications technologies, which can initialize a sequence generator during device-to-device communication, reduce time of transmitting data between a transmitter and a receiver, and save transmission resources. The method of the present invention includes: initializing, by a transmitter, a sequence generator according to a synchronization source ID, a group ID, and a timeslot number, scrambling to-be-transmitted information according to a pseudo random binary sequence generated by the sequence generator, and transmitting scrambled to-be-transmitted information; and receiving, by a receiver, the scrambled to-be-transmitted information transmitted by the transmitter, and descrambling the scrambled to-be-transmitted information transmitted by the transmitter. The present invention is applied to a scenario in which a transmitter scrambles and transmits to-be-transmitted information.

## Description

### TECHNICAL FIELD

The present invention relates to the field of communications technologies, and in particular, to an information transmission method and apparatus.

### BACKGROUND

D2D (Device to Device, device to device) refers to direct communication between terminal devices, or direct communication performed with the assistance of a network. There are three working scenarios for the D2D, which are separately network coverage, no network coverage and partial network coverage. In a working scenario with network coverage, terminal devices that participate in D2D communication are all within coverage of a network; in a working scenario without network coverage, terminal devices that participate in D2D communication are all out of coverage of a network; and in a working scenario with partial network coverage, some terminal devices that participate in D2D communication are within coverage of a network, and some other terminal devices are out of the coverage of the network.

Modes of the device-to-device communication may be divided into a broadcast mode, a multicast mode and a unicast mode. In the broadcast mode, a specific receiver is not limited during transmission performed by a transmitter, that is, the transmitter does not know whether there is a receiver that is performing receiving, and such information may not exist at a network side. There are actually target receivers in the multicast and the unicast modes.

In a radio communication process, various signals exist in radio space. To enable a receiver to better receive wanted signals and eliminate unnecessary interference, scrambling processing is usually performed on transmitted signals. A transmitter uses a sequence generator to generate a pseudo random binary sequence, performs a scrambling operation on to-be-transmitted information, and transmits scrambled information. For example, in a 3GPP LTE system, a sequence generator is initialized for an uplink PUSCH according to a terminal device ID, a sequence number of a codeword, a timeslot number and a cell ID. However, in a working scenario with partial network coverage and a working scenario without network coverage, terminal devices out of coverage of a network do not have cell ID information, and therefore in the prior art, a sequence generator cannot be initialized according to a terminal device ID, a sequence number of a codeword, a timeslot number and a cell ID, so that an information scrambling problem in the D2D cannot be solved. In the prior art, a sequence generator can also be initialized by using a transmitter ID in combination with some other information, to generate a pseudo random binary sequence required for scrambling. In D2D (Device to Device, device to device), direct communication is performed between mobile terminals or direct communication is performed with the assistance of a network. In a broadcast mode, a multicast mode and a unicast mode of the D2D, mutual communication can be performed between mobile terminals, however, a mobile terminal serving as a receiver may not know a transmitter ID of a mobile terminal serving as a transmitter. If the receiver needs to be enabled to know the transmitter ID, a mechanism needs to be established additionally to enable a device at a network side or the transmitter to notify other receivers of the transmitter ID of the transmitter. However, to add a process of notifying the receiver to enable the receiver to acquire the transmitter ID, data transmission between the device at the network side or the transmitter and the receiver takes more time and occupies more transmission resources; and for the broadcast mode, the receiver cannot be notified of a transmitter ID that is at a moment due to lack of receiver information.

### SUMMARY

Embodiments of the present invention provide an information transmission method and apparatus, in D2D, a sequence generator is initialized according to synchronization source ID information and group ID information, which can reduce time of data transmission between a transmitter and a receiver or between a network side and a receiver, and save transmission resources.

To achieve the foregoing objectives, the embodiments of the present invention use the following technical solutions:

According to a first aspect, an embodiment of the present invention provides an information transmission apparatus which is used in a transmitter, where the apparatus supports device to device D2D, and the apparatus includes:
a first initialization module, configured to initialize a sequence generator according to a synchronization source ID, a group ID, and a timeslot number;
a first scrambling module, configured to scramble to-be-transmitted information according to a pseudo random binary sequence generated by the sequence generator; and
a first transmitting module, configured to transmit scrambled to-be-transmitted information.

With reference to the first aspect, in a first possible implementation manner, the first initialization module includes:
a first acquiring unit, configured to acquire a first initial value cᵢₙᵢₜ₁ according to cᵢₙᵢₜ₁ = n*_{groupID}*.2*^{A}* + *q*.2*^{B}* + └n*ₛ* / 2┘.2*^{C}* + *N_{sID}*, where n_{groupID} is the group ID, q is a sequence number of a codeword, nₛ is the timeslot number, N_{sID} is the synchronization source ID, and A, B and C are all positive integers; and
a first initialization unit, configured to initialize the sequence generator by using the first initial value cᵢₙᵢₜ₁.

With reference to the first possible implementation manner of the first aspect, in a second possible implementation manner, a value of a bit of the codeword is constantly 1.

According to a second aspect, an embodiment of the present invention provides an information transmission apparatus which is used in a transmitter, where the apparatus supports device to device D2D, and the apparatus includes:
a second initialization module, configured to initialize a sequence generator according to service ID information and a timeslot number;
a second scrambling module, configured to scramble to-be-transmitted information according to a pseudo random binary sequence generated by the sequence generator; and
a second transmitting module, configured to transmit scrambled to-be-transmitted information.

With reference to the second aspect, in a first possible implementation manner, the D2D is in a broadcast mode, and the service ID information is acquired from a preset service ID information set, or the service ID information is acquired from a service ID information set broadcasted by a base station.

With reference to the second aspect or the first possible implementation manner of the second aspect, in a second possible implementation manner, the D2D is in the broadcast mode, and the second initialization module includes:
a second acquiring unit, configured to acquire a second initial value cᵢₙᵢₜ₂ according to *c*ᵢₙᵢₜ₂ = └n*ₛ*/2┘*.*2*D*+*N*_{*D*2*D*}, where nₛ is the timeslot number, N_{D2D} is the service ID information, and D is a positive integer; and
a second initialization unit, configured to initialize the sequence generator by using the second initial value Cᵢₙᵢₜ₂.

According to a third aspect, an embodiment of the present invention provides an information transmission apparatus which is used in a receiver, where the apparatus supports device to device D2D, and the apparatus includes:
a receiving module, configured to receive scrambled to-be-transmitted information transmitted by a transmitter, where the scrambled to-be-transmitted information is to-be-transmitted information scrambled by the transmitter according to a pseudo random binary sequence generated by a sequence generator, and the pseudo random binary sequence is generated by the transmitter by initializing the sequence generator according to a synchronization source ID, a group ID, and a timeslot number; and
a descrambling module, configured to descramble the scrambled to-be-transmitted information transmitted by the transmitter.

According to a fourth aspect, an embodiment of the present invention provides an information transmission method which is used for a transmitter, where the transmitter supports device to device D2D, and the method includes:
initializing a sequence generator according to a synchronization source ID, a group ID, and a timeslot number;
scrambling to-be-transmitted information according to a pseudo random binary sequence generated by the sequence generator; and
transmitting scrambled to-be-transmitted information.

With reference to the fourth aspect, in a first possible implementation manner, the initializing a sequence generator according to a synchronization source ID, a group ID, and a timeslot number includes:
acquiring a first initial value cᵢₙᵢₜ₁ according to cᵢₙᵢₜ₁ =*n_{groupID}*.2*^{A}* + *q*.2*^{B}* + └n*ₛ* / 2┘.2*^{C}* + *N_{sID}*, where n_{groupID} is the group ID, q is a sequence number of a codeword, nₛ is the timeslot number, N_{sID} is the synchronization source ID, and A, B and C are all positive integers; and
initializing the sequence generator by using the first initial value cᵢₙᵢₜ₁.

With reference to the first possible implementation manner of the fourth aspect, in a second possible implementation manner, a value of a bit of the codeword is constantly 1.

According to a fifth aspect, an embodiment of the present invention provides an information transmission method which is used for a transmitter, where the transmitter supports device to device D2D, and the method includes:
initializing a sequence generator according to service ID information and a timeslot number;
scrambling to-be-transmitted information according to a pseudo random binary sequence generated by the sequence generator; and
transmitting scrambled to-be-transmitted information.

With reference to the fourth aspect, in a first possible implementation manner, the D2D is in a broadcast mode, and the service ID information is acquired from a preset service ID information set, or the service ID information is acquired from a service ID information set broadcasted by a base station.

With reference to the fourth aspect or the first possible implementation manner of the fourth aspect, in a second possible implementation manner, the D2D is in the broadcast mode, and the initializing a sequence generator according to service ID information and a timeslot number includes:
acquiring a second initial value cᵢₙᵢₜ₂ according to *c*ᵢₙᵢₜ₂ = └n*ₛ*/2┘.2*^{D}* +*N_{D2D}*, where nₛ is the timeslot number, N_{D2D} is the service ID information, and D is a positive integer; and
initializing the sequence generator by using the second initial value Cᵢₙᵢₜ₂.

According to a sixth aspect, an embodiment of the present invention provides an information transmission method which is used for a receiver, where the receiver supports device to device D2D, and the method includes:
receiving scrambled to-be-transmitted information transmitted by a transmitter, where the scrambled to-be-transmitted information is to-be-transmitted information scrambled by the transmitter according to a pseudo random binary sequence generated by a sequence generator, and the pseudo random binary sequence is generated by the transmitter by initializing the sequence generator according to a synchronization source ID, a group ID, and a timeslot number; and
descrambling the scrambled to-be-transmitted information transmitted by the transmitter.

According to the information transmission method and apparatus provided by the embodiments of the present invention, a transmitter can initialize a sequence generator according to a synchronization source ID, a group ID, and a timeslot number or initialize a sequence generator according to service ID information and a timeslot number, scramble to-be-transmitted information according to a pseudo random binary sequence generated by the sequence generator, and transmit scrambled to-be-transmitted information; and a receiver can receive the scrambled to-be-transmitted information transmitted by the transmitter, and descramble the scrambled to-be-transmitted information transmitted by the transmitter. Compared with the prior art, in this solution, a sequence generator is initialized by using a synchronization source ID, a group ID, and a timeslot number, which avoids initializing the sequence generator by using a transmitter ID in combination with some other information, thereby saving a process of notifying a receiver to enable the receiver to acquire the transmitter ID, saving time of data transmission between a device at a network side or a transmitter and the receiver, and reducing occupied transmission resources.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of an information transmission apparatus according to an embodiment of the present invention;
FIG. 2 is a schematic structural diagram of a specific implementation manner of an information transmission apparatus according to an embodiment of the present invention;
FIG. 3 is a schematic structural diagram of another information transmission apparatus according to an embodiment of the present invention;
FIG. 4 is a schematic structural diagram of a specific implementation manner of another information transmission apparatus according to an embodiment of the present invention;
FIG. 5 is a schematic structural diagram of still another information transmission apparatus according to an embodiment of the present invention;
FIG. 6 is a schematic structural diagram of another transmitter according to an embodiment of the present invention;
FIG. 7 is a schematic structural diagram of another transmitter according to an embodiment of the present invention;
FIG. 8 is a schematic structural diagram of a receiver according to an embodiment of the present invention;
FIG. 9 is a flowchart of an information transmission method according to an embodiment of the present invention;
FIG. 10 is a flowchart of a specific implementation manner of an information transmission method according to an embodiment of the present invention;
FIG. 11 is a flowchart of another information transmission method according to an embodiment of the present invention;
FIG. 12 is a flowchart of a specific implementation manner of another information transmission method according to an embodiment of the present invention; and
FIG. 13 is a flowchart of still another information transmission method according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

The technical solutions provided by the embodiments of the present invention are applied to an information transmission system, where the information transmission system includes a transmitter and a receiver. The transmitter can initialize a sequence generator according to a synchronization source ID, a group ID, and a timeslot number or initialize a sequence generator according to service ID information and a timeslot number, scramble to-be-transmitted information according to a pseudo random binary sequence generated by the sequence generator, and transmit scrambled to-be-transmitted information; and the receiver can receive and descramble the scrambled to-be-transmitted information transmitted by the transmitter.

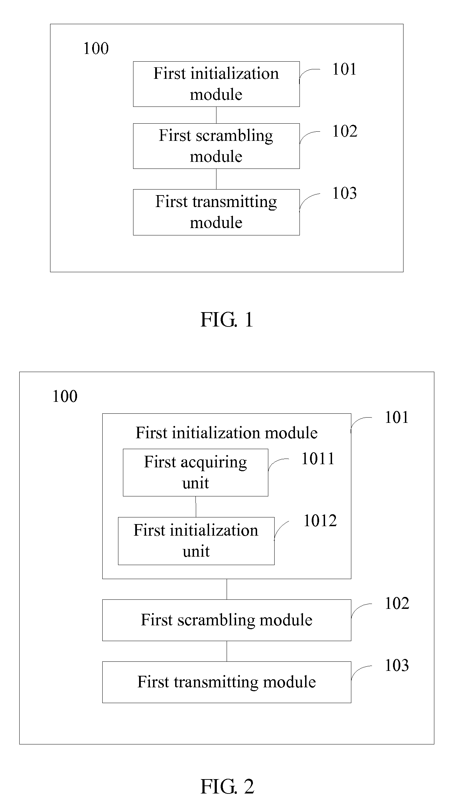

An embodiment of the present invention provides an information transmission apparatus 100 which is used in a transmitter. As shown in FIG. 1, the information transmission apparatus 100 includes a first initialization module 101, a first scrambling module 102, and a first transmitting module 103.

The first initialization module 101 is configured to initialize a sequence generator according to a synchronization source ID, a group ID, and a timeslot number.

A synchronization source is a synchronization reference source of the transmitter. In a working scenario with network coverage, a base station generally serves as a synchronization source, and in this case, the synchronization source ID is a cell ID; in a working scenario without network coverage, a terminal device may serve as a synchronization source, and in this case, the synchronization source ID is a UE ID; and in a working scenario with partial network coverage, a terminal device within network coverage uses a base station as a synchronization source, and a terminal device out of the network coverage may use, by referring to a synchronization condition of the terminal device within the network coverage, a synchronization source ID of the terminal device within the network coverage, that is, a cell ID corresponding to the terminal device within the network coverage.

The group ID is an identification number shared by terminal devices that participate in D2D communication. In a working scenario with network coverage, the timeslot number is a sequence number of a time unit, and a value may be selected from a total of 20 numeric values from 0 to 19; in a working scenario with partial network coverage, one group of terminal devices participating in D2D communication can refer to network timing, and still can use a timeslot number of a network; and in a working scenario without network coverage, a time division method similar to that in the working scenario with network coverage or with partial network coverage may be used, that is, a timeslot number of a network is used, where the time division method may also use non-timeslot division, that is, the sequence generator is initialized without using the timeslot number of the network.

The first scrambling module 102 is configured to scramble to-be-transmitted information according to a pseudo random binary sequence generated by the sequence generator.

The pseudo random binary sequence generated by the sequence generator is multiplied by the to-be-transmitted information, so as to scramble the to-be-transmitted information.

The first transmitting module 103 is configured to transmit scrambled to-be-transmitted information.

According to the information transmission apparatus provided by this embodiment of the present invention, the apparatus can initialize a sequence generator according to a synchronization source ID, a group ID, and a timeslot number, scramble to-be-transmitted information according to a pseudo random binary sequence generated by the sequence generator, and transmit scrambled to-be-transmitted information. Compared with the prior art, in this solution, a sequence generator is initialized by using a synchronization source ID, a group ID, and a timeslot number, which avoids initializing the sequence generator by using a transmitter ID in combination with some other information, thereby saving a process of notifying a receiver to enable the receiver to acquire the transmitter ID, saving time of data transmission between a transmitter and the receiver, and reducing occupied transmission resources.

Further, the first initialization module 101, as shown in FIG. 2, includes a first acquiring unit 1011 and a first initialization unit 1012.

The first acquiring unit 1011 is configured to acquire a first initial value cᵢₙᵢₜ₁ according to cᵢₙᵢₜ₁ = n*_{groupID}*.2*^{A}*+ *q*.2*^{B}* + └n*ₛ* / 2┘.2*^{C}* + *N_{sID}*,
where n_{groupID} is the group ID, q is a sequence number of a codeword, nₛ is the timeslot number, N_{sID} is the synchronization source ID, and A, B and C are all positive integers. The foregoing calculation splices information, such as the group ID, the sequence number of the codeword, the timeslot number and the synchronization source ID, to form an N-bit binary numeric value string to initialize the sequence generator, where n_{groupID} is the group ID, q is the sequence number of the codeword, nₛ is the timeslot number, and N_{sID} is the synchronization source ID. A terminal device generally receives or transmits one codeword or two codewords, the sequence number of the codeword may have two available values, 0 and 1, which represent that scrambled information is the zeroth codeword or the first codeword. Values of A, B, C and N herein may vary according to an actual situation, specifically, the values of A, B and C are determined by the number of bits of information, such as the group ID, the sequence number of the codeword, the timeslot number and the synchronization source ID. For example, N_{sID} is 9 bits, then C=9; if a value range of nₛ is 0 to 19, nₛ is an integer, and └n*ₛ*/2┘. is a rounded-down operation on a numeric value of nₛ/2, a value of └n*ₛ*/2┘. may be indicated by a 4-bit binary number, and B=C+4=9+4=13; if the value of q is 0 or 1, the value of q may be indicated by a 1-bit binary number, and A=B+1=9+4+1=13+1=14.

Optionally, a value of a bit of the codeword may be constantly 1, and the bit of the codeword is used to indicate the sequence number of the codeword. In a conventional network data transmission scenario, a terminal device receives or transmits a maximum of two codewords, that is, the terminal device receives or transmits one codeword or two codewords, and therefore the terminal device inevitably receives or transmits a codeword whose sequence number is 0. The bit of the codeword is constantly 1, which indicates that a codeword whose sequence number is 1 is received or transmitted, thereby making a value of a pseudo random binary sequence generated by a sequence generator in D2D communication to be distinguished from a value of a pseudo random binary sequence in network data communication as far as possible.

The first initialization unit 1012 is configured to initialize the sequence generator by using the first initial value cᵢₙᵢₜ₁.

The acquired first initial value cᵢₙᵢₜ₁ is input to the sequence generator, and the sequence generator is initialized according to a generation rule that is of the pseudo random binary sequence and is in the sequence generator.

According to the information transmission apparatus provided by this embodiment of the present invention, the apparatus can initialize a sequence generator according to a synchronization source ID, a group ID, and a timeslot number, scramble to-be-transmitted information according to a pseudo random binary sequence generated by the sequence generator, and transmit scrambled to-be-transmitted information. Compared with the prior art, in this solution, a sequence generator is initialized by using a synchronization source ID, a group ID, and a timeslot number, which avoids initializing the sequence generator by using a transmitter ID in combination with some other information, thereby saving a process of notifying a receiver to enable the receiver to acquire the transmitter ID, saving time of data transmission between a transmitter and the receiver, and reducing occupied transmission resources.

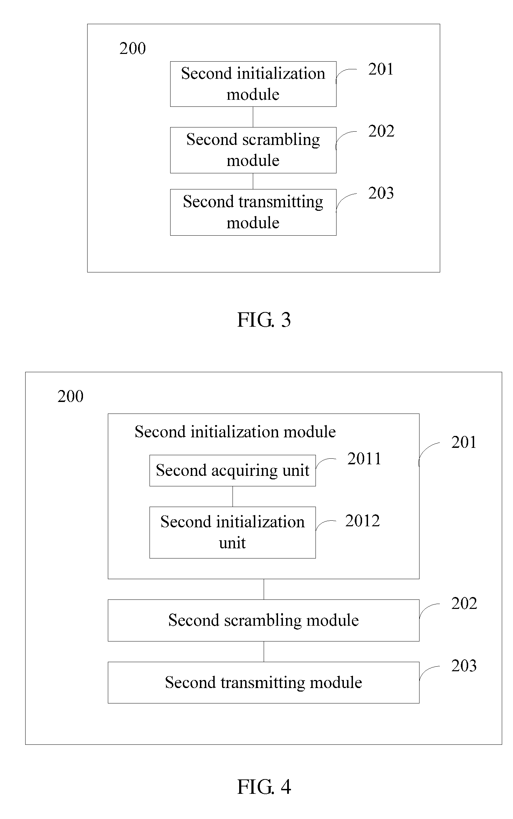

An embodiment of the present invention further provides an information transmission apparatus 200 which is used in a transmitter. As shown in FIG. 3, the information transmission apparatus 200 includes a second initialization module 201, a second scrambling module 202, and a second transmitting module 203.

The second initialization module 201 is configured to initialize a sequence generator according to service ID information and a timeslot number.

The service ID information is service identification information for D2D communication, and can be used to identify various D2D communication services. The service ID information may be acquired from a preset service ID information set, and may also be acquired from a service ID information set broadcasted by a base station. Specifically, an universal service ID information set for D2D communication may be specified and set when a terminal device is delivered, and the service ID information is acquired from the universal service ID information set for the D2D communication, where the terminal device includes a transmitter and a receiver, the transmitter selects service ID information corresponding to a service of the transmitter from the service ID information set according to the service of the transmitter, and when receiving information, the receiver attempts to descramble each piece of service ID information in the service ID information set one by one according to the fixed service ID information set specified and set when the terminal device is delivered. An universal service ID information set, for D2D communication, of a terminal device may also be broadcasted by a base station, and the service ID information is acquired from the universal service ID information set that is for the D2D communication, of the terminal device, and broadcasted by the base station, where the terminal device includes a transmitter and a receiver, the transmitter selects service ID information corresponding to a service of the transmitter from the service ID information set broadcasted by the base station, and when receiving scrambled to-be-transmitted information transmitted by the transmitter, the receiver attempts to descramble each piece of service ID information in the service ID information set one by one according to the service ID information set broadcasted by the base station. Optionally, the service ID information may also be agreed upon in advance before communication by terminal devices participating in D2D communication, and the service ID information agreed upon in advance is used in a communication process.

In a working scenario with network coverage, the timeslot number is a sequence number of a time unit, and a value may be selected from a total of 20 numeric values from 0 to 19. In a working scenario with partial network coverage, one group of terminal devices participating in D2D communication can refer to network timing, and still can use a timeslot number of a network; and in a working scenario without network coverage, a time division method similar to that in the working scenario with network coverage or with partial network coverage may be used, that is, a timeslot number of a network is used, where the time division method may also use non-timeslot division, that is, the sequence generator is initialized without using the timeslot number of the network.

The second scrambling module 202 is configured to scramble to-be-transmitted information according to a pseudo random binary sequence generated by the sequence generator.

The pseudo random binary sequence generated by the sequence generator is multiplied by the to-be-transmitted information, so as to scramble the to-be-transmitted information.

The second transmitting module 203 is configured to transmit scrambled to-be-transmitted information.

According to the information transmission apparatus further provided by this embodiment of the present invention, the apparatus can acquire service ID information, initialize a sequence generator according to a timeslot number and the service ID information, scramble to-be-transmitted information according to a pseudo random binary sequence generated by the sequence generator, and transmit scrambled to-be-transmitted information. Compared with the prior art, in this solution, a sequence generator is initialized by using a timeslot number and service ID information, which avoids initializing the sequence generator by using a transmitter ID in combination with some other information, thereby saving a process of notifying a receiver to enable the receiver to acquire the transmitter ID, saving time of data transmission between a device at a network side or a transmitter and the receiver, and reducing occupied transmission resources.

Further, D2D (Device to Device, device to device) is in a broadcast mode, and as shown in FIG. 4, the second initialization module 201 includes a second acquiring unit 2011 and a second initialization unit 2012.

The second acquiring unit 2011 is configured to acquire a second initial value cᵢₙᵢₜ₂ according to *c*ᵢₙᵢₜ₂ = └n*ₛ*/2┘.2*^{D}*+*N_{D2D}*,
where nₛ is the timeslot number, N_{D2D} is the service ID information, and D is a positive integer. D is the number of bits of the service ID information, for example, the service ID information occupies 9 bits, then D=9.

The second initialization unit 2012 is configured to initialize the sequence generator by using the second initial value cᵢₙᵢₜ₂.

The acquired second initial value cᵢₙᵢₜ₂ is input to the sequence generator, and the sequence generator is initialized according to a generation rule that is of the pseudo random binary sequence and is in the sequence generator.

Further, D2D is in the broadcast mode. The service ID information is acquired from a preset service ID information set, or the service ID information is acquired from a service ID information set broadcasted by a base station.

According to the information transmission apparatus further provided by this embodiment of the present invention, the apparatus can acquire service ID information from a preset service ID information set or a service ID information set broadcasted by a base station, initialize a sequence generator according to a timeslot number and the service ID information by using *c*ᵢₙᵢₜ₂ =└n*ₛ*/2].2*^{D}* + *N_{D2D}*, scramble to-be-transmitted information according to a pseudo random binary sequence generated by the sequence generator, and transmit scrambled to-be-transmitted information. Compared with the prior art, in this solution, a sequence generator is initialized by using a timeslot number and service ID information, which avoids initializing the sequence generator by using a transmitter ID in combination with some other information, thereby saving a process of notifying a receiver to enable the receiver to acquire the transmitter ID, saving time of data transmission between a device at a network side or a transmitter and the receiver, and reducing occupied transmission resources.

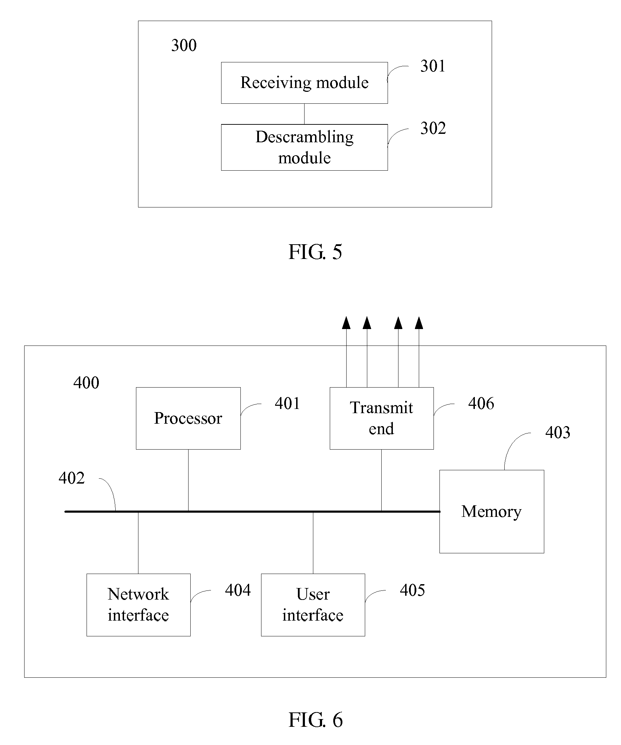

An embodiment of the present invention provides an information transmission apparatus 300 which is used in a receiver. As shown in FIG. 5, the information transmission apparatus 300 includes a receiving module 301 and a descrambling module 302.

The receiving module 301 is configured to receive scrambled to-be-transmitted information transmitted by a transmitter.

The scrambled to-be-transmitted information is to-be-transmitted information scrambled by the transmitter according to a pseudo random binary sequence generated by a sequence generator, and the pseudo random binary sequence is generated by the transmitter by initializing the sequence generator according to a synchronization source ID, a group ID, and a timeslot number.

The descrambling module 302 is configured to descramble the scrambled to-be-transmitted information transmitted by the transmitter.

The receiver performs the descrambling according to the pseudo random binary sequence generated by the sequence generator initialized by the transmitter.

According to the information transmission apparatus provided by this embodiment of the present invention, a transmitter can initialize a sequence generator according to a synchronization source ID, a group ID, and a timeslot number, scramble to-be-transmitted information according to a pseudo random binary sequence generated by the sequence generator, and transmit scrambled to-be-transmitted information; and the apparatus can receive the scrambled to-be-transmitted information transmitted by the transmitter, and descramble the scrambled to-be-transmitted information transmitted by the transmitter. Compared with the prior art, in this solution, a sequence generator is initialized by using a synchronization source ID, a group ID, and a timeslot number, which avoids initializing the sequence generator by using a transmitter ID in combination with some other information, thereby saving a process of notifying a receiver to enable the receiver to acquire the transmitter ID, saving time of data transmission between a transmitter and the receiver, and reducing occupied transmission resources.

An embodiment of the present invention provides a transmitter 400. As shown in FIG. 6, the transmitter 400 includes: at least one processor 401, such as a CPU, at least one communications bus 402, a memory 403, at least one network interface 404 or user interface 405, and a transmit end 406. The communications bus 402 is configured to implement connections and communication between these components. Optionally, the user interface 405 includes devices, such as a display, a keyboard, a mouse, and a touch screen. The memory 403 may include a high-speed RAM memory, and may also include a non-volatile memory (non-volatile memory), for example, at least one magnetic disk memory. The transmit end 406 is configured to transmit scrambled to-be-transmitted information.

Specifically, the memory 403 may be configured to store a synchronization source ID, a group ID, and a timeslot number, may further be configured to store a pseudo random binary sequence generated by a sequence generator, and may further store to-be-transmitted information and scrambled to-be-transmitted information.

Further, the memory 403 may be configured to store a first initial value cᵢₙᵢₜ₁ and a sequence number of a codeword, and may further be configured to store a value of a bit of the codeword.

Specifically, the processor 401 may be configured to initialize the sequence generator according to the synchronization source ID, the group ID, and the timeslot number; and configured to scramble the to-be-transmitted information according to the pseudo random binary sequence generated by the sequence generator; and configured to control the transmit end 406 to transmit the scrambled to-be-transmitted information.

Further, the processor 401 may further be configured to acquire an initial value cᵢₙᵢₜ according to *c*ᵢₙᵢₜ = n*_{groupID}.*2*^{A}*+*q*.*2^{B}*+└n*ₛ* / 2┘.2*^{C}* + *N_{sID}*, where n_{groupID} is the group ID, q is the sequence number of the codeword, nₛ is the timeslot number, N_{sID} is the synchronization source ID, and A, B and C are all positive integers; and configured to initialize the sequence generator by using the initial value cᵢₙᵢₜ.

Optionally, the value of the bit of the codeword is constantly 1.

According to the transmitter provided by this embodiment of the present invention, the transmitter can initialize a sequence generator according to a synchronization source ID, a group ID, and a timeslot number, scramble to-be-transmitted information according to a pseudo random binary sequence generated by the sequence generator, and transmit scrambled to-be-transmitted information; and a receiver can receive the scrambled to-be-transmitted information transmitted by the transmitter, and descramble the scrambled to-be-transmitted information transmitted by the transmitter. Compared with the prior art, in this solution, a sequence generator is initialized by using a synchronization source ID, a group ID, and a timeslot number, which avoids initializing the sequence generator by using a transmitter ID in combination with some other information, thereby saving a process of notifying a receiver to enable the receiver to acquire the transmitter ID, saving time of data transmission between a transmitter and the receiver, and reducing occupied transmission resources.

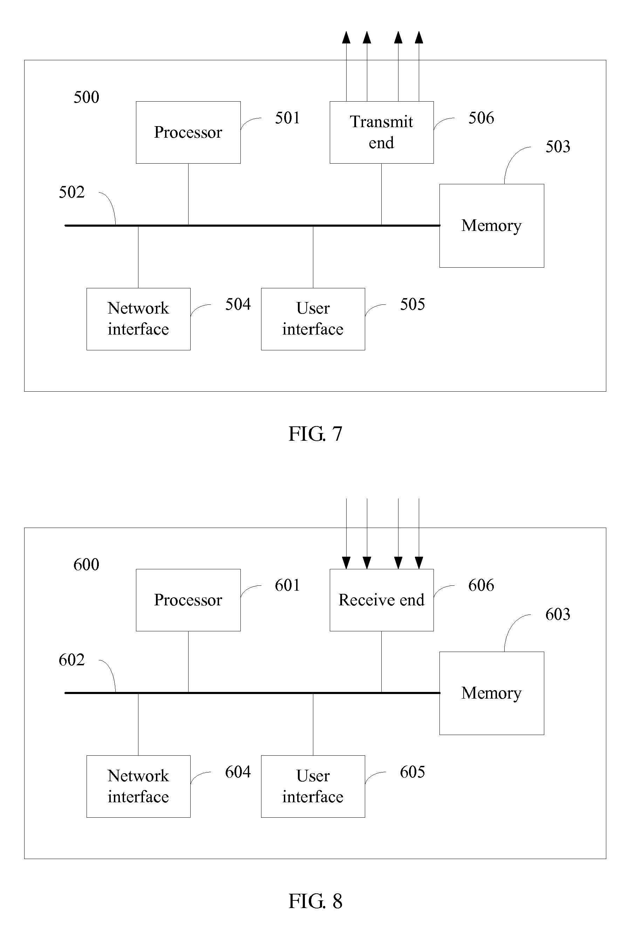

An embodiment of the present invention provides a transmitter 500. As shown in FIG. 7, the transmitter 500 includes: at least one processor 501, such as a CPU, at least one communications bus 502, a memory 503, at least one network interface 504 or user interface 505, and a transmit end 506. The communications bus 502 is configured to implement connections and communication between these components. Optionally, the user interface 505 includes devices, such as a display, a keyboard, a mouse, and a touch screen. The memory 503 may include a high-speed RAM memory, and may also include a non-volatile memory (non-volatile memory), for example, at least one magnetic disk memory. The transmit end 506 is configured to transmit scrambled to-be-transmitted information.

Specifically, the memory 503 may be configured to store service ID information and a timeslot number, may further be configured to store a pseudo random binary sequence generated by a sequence generator, and may further store to-be-transmitted information and scrambled to-be-transmitted information.

Further, the memory 503 may further be configured to store a preset service ID information set and a service ID information set broadcasted by a base station, and may further be configured to store a second initial value Cᵢₙᵢₜ₂.

Specifically, the processor 501 may be configured to initialize the sequence generator according to the service ID information and the timeslot number; configured to scramble the to-be-transmitted information according to the pseudo random binary sequence generated by the sequence generator; and configured to control the transmit end 506 to transmit the scrambled to-be-transmitted information.

Further, D2D is in a broadcast mode, and the service ID information is acquired from the preset service ID information set, or the service ID information is acquired from the service ID information set broadcasted by the base station.

Further, D2D is in the broadcast mode, and the processor 501 may be configured to acquire a second initial value cᵢₙᵢₜ₂ according to *c*ᵢₙᵢₜ₂ = └n*ₛ*/2]*.2^{D}* +*N_{D2D},* where nₛ is the timeslot number, N_{D2D} is the service ID information, and D is a positive integer; and configured to initialize the sequence generator according to the second initial value Cᵢₙᵢₜ₂.

According to the transmitter provided by this embodiment of the present invention, the transmitter can acquire service ID information from a preset service ID information set or a service ID information set broadcasted by a base station, initialize a sequence generator according to a timeslot number and the service ID information by using *c*ᵢₙᵢₜ₂ =└n*ₛ*/2┘.2*^{D}* + *N_{D2D}*, scramble to-be-transmitted information according to a pseudo random binary sequence generated by the sequence generator, and transmit scrambled to-be-transmitted information. Compared with the prior art, in this solution, a sequence generator is initialized by using a timeslot number and service ID information, which avoids initializing the sequence generator by using a transmitter ID in combination with some other information, thereby saving a process of notifying a receiver to enable the receiver to acquire the transmitter ID, saving time of data transmission between a device at a network side or a transmitter and the receiver, and reducing occupied transmission resources.

An embodiment of the present invention provides a receiver 600. As shown in FIG. 8, the receiver 600 includes: at least one processor 601, such as a CPU, at least one communications bus 602, a memory 603, at least one network interface 604 or user interface 605, and a transmit end 606. The communications bus 602 is configured to implement connections and communication between these components. Optionally, the user interface 605 includes devices, such as a display, a keyboard, a mouse, and a touch screen. The memory 603 may include a high-speed RAM memory, and may also include a non-volatile memory (non-volatile memory), for example, at least one magnetic disk memory. The receive end 606 is configured to receive scrambled to-be-transmitted information transmitted by a transmitter.

Specifically, the memory 603 may be configured to store the scrambled to-be-transmitted information that is transmitted by the transmitter and received by the receiver, and may further store descrambled information.

Specifically, the processor 601 may be configured to receive the scrambled to-be-transmitted information transmitted by the transmitter, where the scrambled to-be-transmitted information is to-be-transmitted information scrambled by the transmitter according to a pseudo random binary sequence generated by a sequence generator, and the pseudo random binary sequence is generated by the transmitter by initializing the sequence generator according to a synchronization source ID, a group ID, and a timeslot number; and configured to descramble the scrambled to-be-transmitted information transmitted by the transmitter.

According to the receiver provided by this embodiment of the present invention, a transmitter can initialize a sequence generator according to a synchronization source ID, a group ID, and a timeslot number, scramble to-be-transmitted information according to a pseudo random binary sequence generated by the sequence generator, and transmit scrambled to-be-transmitted information; and the receiver can receive the scrambled to-be-transmitted information transmitted by the transmitter, and descramble the scrambled to-be-transmitted information transmitted by the transmitter. Compared with the prior art, in this solution, a sequence generator is initialized by using a synchronization source ID, a group ID, and a timeslot number, which avoids initializing the sequence generator by using a transmitter ID in combination with some other information, thereby saving a process of notifying a receiver to enable the receiver to acquire the transmitter ID, saving time of data transmission between a transmitter and the receiver, and reducing occupied transmission resources.

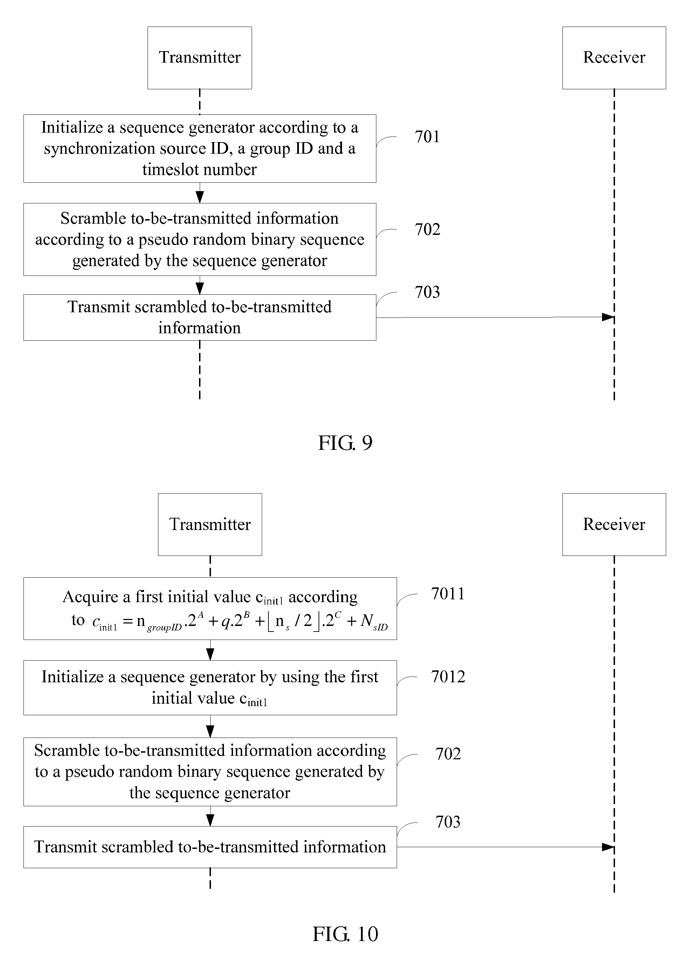

An embodiment of the present invention provides an information transmission method, which is used for a transmitter and as shown in FIG. 9, includes:

701. Initialize a sequence generator according to a synchronization source ID, a group ID, and a timeslot number.

A synchronization source is a synchronization reference source of the transmitter. In a working scenario with network coverage, a base station generally serves as a synchronization source, and in this case, the synchronization source ID is a cell ID; in a working scenario without network coverage, a terminal device may serve as a synchronization source, and in this case, the synchronization source ID is a UE ID; and in a working scenario with partial network coverage, a terminal device within network coverage uses a base station as a synchronization source, and a terminal device out of the network coverage may use, by referring to a synchronization condition of the terminal device within the network coverage, a synchronization source ID of the terminal device within the network coverage, that is, a cell ID corresponding to the terminal device within the network coverage.

The group ID is an identification number shared by terminal devices that participate in D2D communication. In a working scenario with network coverage, the timeslot number is a sequence number of a time unit, and a value may be selected from a total of 20 numeric values from 0 to 19; in a working scenario with partial network coverage, one group of terminal devices participating in D2D communication can refer to network timing, and still can use a timeslot number of a network; and in a working scenario without network coverage, a time division method similar to that in the working scenario with network coverage or with partial network coverage may be used, that is, a timeslot number of a network is used, where the time division method may also use non-timeslot division, that is, the sequence generator is initialized without using the timeslot number of the network.

702. Scramble to-be-transmitted information according to a pseudo random binary sequence generated by the sequence generator.

The pseudo random binary sequence generated by the sequence generator is multiplied by the to-be-transmitted information, so as to scramble the to-be-transmitted information.

703. Transmit scrambled to-be-transmitted information.

According to the information transmission method provided by this embodiment of the present invention, a transmitter can initialize a sequence generator according to a synchronization source ID, a group ID, and a timeslot number, scramble to-be-transmitted information according to a pseudo random binary sequence generated by the sequence generator, and transmit scrambled to-be-transmitted information. Compared with the prior art, in this solution, a sequence generator is initialized by using a synchronization source ID, a group ID, and a timeslot number, which avoids initializing the sequence generator by using a transmitter ID in combination with some other information, thereby saving a process of notifying a receiver to enable the receiver to acquire the transmitter ID, saving time of data transmission between a device at a network side or a transmitter and the receiver, and reducing occupied transmission resources.

Further, based on the solution shown in FIG. 9, this embodiment of the present invention further provides a specific solution to the information transmission method to further detail an implementation process of 701 shown in FIG. 9, and 701 may be specifically implemented in 7011 and 7012. As shown in FIG. 10, 701 includes:

7011. Acquire a first initial value cᵢₙᵢₜ₁ according to cᵢₙᵢₜ₁ *=*n*_{groupID}.2^{A}* + *q*.2*^{B}* + └n*ₛ*/2┘.2*^{C}* + *N_{sID}.*

The foregoing calculation splices information, such as the group ID, a sequence number of a codeword, the timeslot number and the synchronization source ID, to form an N-bit binary numeric value string to initialize the sequence generator, where n_{groupID} is the group ID, q is the sequence number of the codeword, nₛ is the timeslot number, and N_{sID} is the synchronization source ID. A terminal device generally receives or transmits one codeword or two codewords, the sequence number of the codeword may have two available values, 0 and 1, which represent that scrambled information is the zeroth codeword or the first codeword. Values of A, B, C and N herein may vary according to an actual situation, specifically, the values of A, B and C are determined by the number of bits of information, such as the group ID, the sequence number of the codeword, the timeslot number and the synchronization source ID. For example, N_{sID} is 9 bits, then C=9; if a value range of nₛ is 0 to 19, nₛ is an integer, and └nₛ/2┘. is a rounded-down operation on a numeric value of nₛ/2, a value of └nₛ/2┘. may be indicated by a 4-bit binary number, and B=C+4=9+4=13; if the value of q is 0 or 1, the value of q may be indicated by a 1-bit binary number, and A=B+1=9+4+1=13+1=14.

Optionally, a value of a bit of the codeword may be constantly 1, and the bit of the codeword is used to indicate the sequence number of the codeword. In a conventional network data transmission scenario, a terminal device receives or transmits a maximum of two codewords, that is, the terminal device receives or transmits one codeword or two codewords, and therefore the terminal device inevitably receives or transmits a codeword whose sequence number is 0. The bit of the codeword is constantly 1, which indicates that a codeword whose sequence number is 1 is received or transmitted, thereby making a value of a pseudo random binary sequence generated by a sequence generator in D2D communication to be distinguished from a value of a pseudo random binary sequence in network data communication as far as possible.

7012. Initialize a sequence generator by using the first initial value cᵢₙᵢₜ₁.

The acquired first initial value cᵢₙᵢₜ₁ is input to the sequence generator, and the sequence generator is initialized according to a generation rule that is of the pseudo random binary sequence and is in the sequence generator.

According to the information transmission method provided by this embodiment of the present invention, a transmitter can initialize a sequence generator according to a synchronization source ID, a group ID, a timeslot number and a formula *c*ᵢₙᵢₜ₁ *=* n*_{groupID}.2^{A}*+*q.*2*^{B}*+└n*ₛ*/*2*┘.2*^{C}*+*N_{sID}* by using an initial value cᵢₙᵢₜ₁, scramble to-be-transmitted information according to a pseudo random binary sequence generated by the sequence generator, and transmit scrambled to-be-transmitted information. Compared with the prior art, in this solution, information such as the synchronization source ID, the group ID, and the timeslot number are spliced to form a binary numeric value string by using a synchronization source ID, a group ID, and a timeslot number, and a sequence generator is initialized by using this binary numeric value string, which avoids initializing the sequence generator by using a transmitter ID in combination with some other information, thereby saving a process of notifying a receiver to enable the receiver to acquire the transmitter ID, saving time of data transmission between a device at a network side or a transmitter and the receiver, and reducing occupied transmission resources.

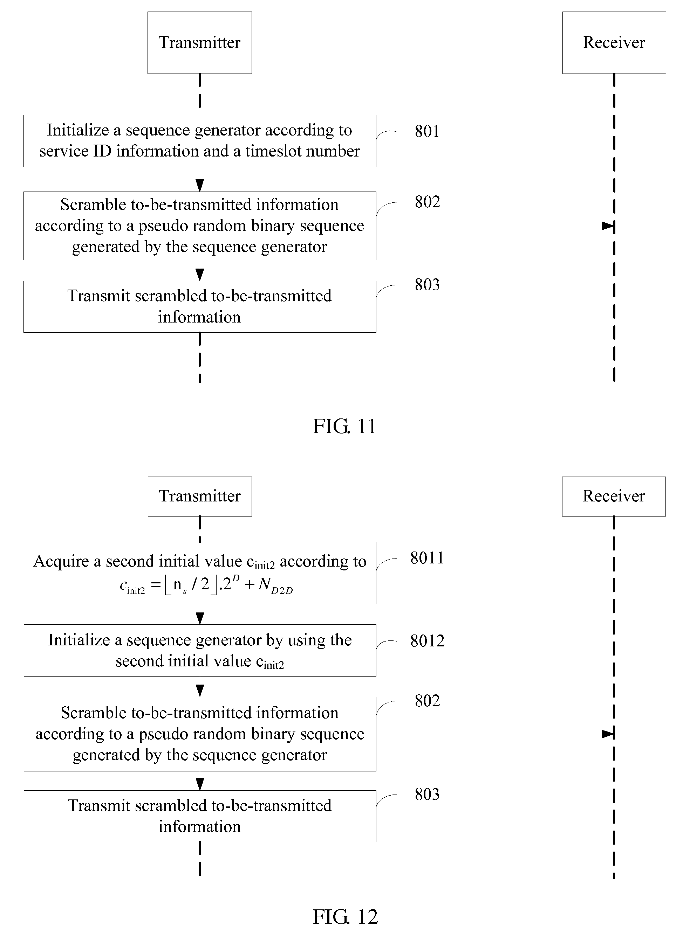

An embodiment of the present invention further provides an information transmission method which is used for a transmitter. As shown in FIG. 11, the method includes:
801. Initialize a sequence generator according to service ID information and a timeslot number.
   The service ID information is service identification information for D2D communication, and can be used to identify various D2D communication services. The service ID information may be acquired from a preset service ID information set, and may also be acquired from a service ID information set broadcasted by a base station. Specifically, an universal service ID information set for D2D communication may be specified and set when a terminal device is delivered, and the service ID information is acquired from the universal service ID information set for the D2D communication, where the terminal device includes a transmitter and a receiver, the transmitter selects service ID information corresponding to a service of the transmitter from the service ID information set according to the service of the transmitter, and when receiving information, the receiver attempts to descramble each piece of service ID information in the service ID information set one by one according to the fixed service ID information set specified and set when the terminal device is delivered. An universal service ID information set, for D2D communication, of a terminal device may also be broadcasted by a base station, and the service ID information is acquired from the universal service ID information set that is for the D2D communication, of the terminal device, and broadcasted by the base station, where the terminal device includes a transmitter and a receiver, the transmitter selects service ID information corresponding to a service of the transmitter from the service ID information set broadcasted by the base station, and when receiving scrambled to-be-transmitted information transmitted by the transmitter, the receiver attempts to descramble each piece of service ID information in the service ID information set one by one according to the service ID information set broadcasted by the base station. Optionally, the service ID information may also be agreed upon in advance before communication by terminal devices participating in D2D communication, and the service ID information agreed upon in advance is used in a communication process.
   In a working scenario with network coverage, the timeslot number is a sequence number of a time unit, and a value may be selected from a total of 20 numeric values from 0 to 19. In a working scenario with partial network coverage, one group of terminal devices participating in D2D communication can refer to network timing, and still can use a timeslot number of a network; and in a working scenario without network coverage, a time division method similar to that in the working scenario with network coverage or with partial network coverage may be used, that is, a timeslot number of a network is used, where the time division method may also use non-timeslot division, that is, the sequence generator is initialized without using the timeslot number of the network.
802. Scramble to-be-transmitted information according to a pseudo random binary sequence generated by the sequence generator.
   The pseudo random binary sequence generated by the sequence generator is multiplied by the to-be-transmitted information, so as to scramble the to-be-transmitted information.
803. Transmit scrambled to-be-transmitted information.

According to the information transmission method further provided by this embodiment of the present invention, a transmitter can acquire service ID information, initialize a sequence generator according to a timeslot number and the service ID information, scramble to-be-transmitted information according to a pseudo random binary sequence generated by the sequence generator, and transmit scrambled to-be-transmitted information. Compared with the prior art, in this solution, a sequence generator is initialized by using a timeslot number and service ID information, which avoids initializing the sequence generator by using a transmitter ID in combination with some other information, thereby saving a process of notifying a receiver to enable the receiver to acquire the transmitter ID, saving time of data transmission between a device at a network side or a transmitter and the receiver, and reducing occupied transmission resources.

Further, based on the solution shown in FIG. 11, this embodiment of the present invention further provides a specific solution to the information transmission method to further detail an implementation process of 801 shown in FIG. 11, and 801 may be specifically implemented in 8011 and 8012. As shown in FIG. 12, 801 includes:
8011. Acquire a second initial value cᵢₙᵢₜ₂ according to *c*ᵢₙᵢₜ₂=└n*ₛ*/2].2*^{D}*+*N_{D2D}*,
   where nₛ is the timeslot number, N_{D2D} is the service ID information, and D is a positive integer. D is the number of bits of the service ID information, for example, the service ID information occupies 9 bits, then D=9.
8012. Initialize a sequence generator by using the second initial value cᵢₙᵢₜ₂.

The acquired second initial value cᵢₙᵢₜ₂ is input to the sequence generator, and the sequence generator is initialized according to a generation rule that is of the pseudo random binary sequence and is in the sequence generator.

According to the information transmission method further provided by this embodiment of the present invention, a transmitter can acquire service ID information from a preset service ID information set or a service ID information set broadcasted by a base station, initialize a sequence generator according to a timeslot number and the service ID information by using *c*ᵢₙᵢₜ₂ =└n*ₛ*/2┘.2*^{D}*+*N_{D2D}*, scramble to-be-transmitted information according to a pseudo random binary sequence generated by the sequence generator, and transmit scrambled to-be-transmitted information. Compared with the prior art, in this solution, a sequence generator is initialized by using a timeslot number and service ID information, which avoids initializing the sequence generator by using a transmitter ID in combination with some other information, thereby saving a process of notifying a receiver to enable the receiver to acquire the transmitter ID, saving time of data transmission between a device at a network side or a transmitter and the receiver, and reducing occupied transmission resources.

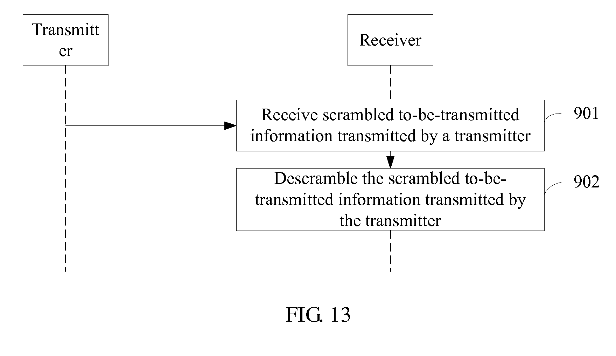

An embodiment of the present invention provides an information transmission method which is used for a receiver. As shown in FIG. 13, the method includes:
901. Receive scrambled to-be-transmitted information transmitted by a transmitter.
   The scrambled to-be-transmitted information is to-be-transmitted information scrambled by the transmitter according to a pseudo random binary sequence generated by a sequence generator, and the pseudo random binary sequence is generated by the transmitter by initializing the sequence generator according to a synchronization source ID, a group ID, and a timeslot number.
902. Descramble the scrambled to-be-transmitted information transmitted by the transmitter.

The receiver performs the descrambling according to the pseudo random binary sequence generated by the sequence generator initialized by the transmitter.

According to the information transmission method provided by this embodiment of the present invention, a transmitter can initialize a sequence generator according to a synchronization source ID, a group ID, and a timeslot number, scramble to-be-transmitted information according to a pseudo random binary sequence generated by the sequence generator, and transmit scrambled to-be-transmitted information; and a receiver can receive the scrambled to-be-transmitted information transmitted by the transmitter, and descramble the scrambled to-be-transmitted information transmitted by the transmitter. Compared with the prior art, in this solution, a sequence generator is initialized by using a synchronization source ID, a group ID, and a timeslot number, which avoids initializing the sequence generator by using a transmitter ID in combination with some other information, thereby saving a process of notifying a receiver to enable the receiver to acquire the transmitter ID, saving time of data transmission between a transmitter and the receiver, and reducing occupied transmission resources.

The embodiments in this specification are all described in a progressive manner, for same or similar parts in the embodiments, reference may be made to these embodiments, and each embodiment focuses on a difference from other embodiments. Especially, a device embodiment is basically similar to a method embodiment, and therefore is described briefly; for related parts, reference may be made to partial descriptions in the method embodiment.

A person of ordinary skill in the art may understand that all or a part of the processes of the methods in the embodiments may be implemented by a computer program instructing relevant hardware. The program may be stored in a computer readable storage medium. When the program runs, the processes of the methods in the embodiments are performed. The storage medium may include: a magnetic disk, an optical disc, a read-only memory (Read-Only Memory, ROM), or a random access memory (Random Access Memory, RAM).

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An information transmission apparatus, applied in a transmitter, wherein the apparatus supports device to device D2D, and the apparatus comprises:
a first initialization module, configured to initialize a sequence generator according to a synchronization source ID, a group ID, and a timeslot number;
a first scrambling module, configured to scramble to-be-transmitted information according to a pseudo random binary sequence generated by the sequence generator; and
a first transmitting module, configured to transmit scrambled to-be-transmitted information.

2. The apparatus according to claim 1, wherein the first initialization module comprises:
a first acquiring unit, configured to acquire a first initial value cᵢₙᵢₜ₁ according to cᵢₙᵢₜ₁ =n*_{groupID}*.2*A*+*q*.2*^{B}*+└n*ₛ*/2┘.2*^{C}* + *N_{sID}*, wherein n_{groupID} is the group ID, q is a sequence number of a codeword, nₛ is the timeslot number, N_{sID} is the synchronization source ID, and A, B and C are all positive integers; and
a first initialization unit, configured to initialize the sequence generator by using the first initial value cᵢₙᵢₜ.

3. The apparatus according to claim 2, wherein a value of a bit of the codeword is constantly 1.

4. An information transmission apparatus, applied to a transmitter, wherein the transmitter supports device to device D2D, and the apparatus comprises:
a second initialization module, configured to initialize a sequence generator according to service ID information and a timeslot number;
a second scrambling module, configured to scramble to-be-transmitted information according to a pseudo random binary sequence generated by the sequence generator; and
a second transmitting module, configured to transmit scrambled to-be-transmitted information.

5. The method according to claim 4, wherein the D2D is in a broadcast mode, and the service ID information is acquired from a preset service ID information set, or the service ID information is acquired from a service ID information set broadcasted by a base station.

6. The method according to claim 4 or 5, wherein the D2D is in the broadcast mode, and the second initialization module comprises:
a second acquiring unit, configured to acquire a second initial value cᵢₙᵢₜ₂ according to *c*ᵢₙᵢₜ₂ *=*└*nₛ*/2┘.2*^{D}*+*N_{D2D}*, wherein nₛ is the timeslot number, N_{D2D} is the service ID information, and D is a positive integer; and
a second initialization unit, configured to initialize the sequence generator by using the second initial value cᵢₙᵢₜ₂.

7. An information transmission apparatus, applied to a receiver, wherein the apparatus supports device to device D2D, and the apparatus comprises:
a receiving module, configured to receive scrambled to-be-transmitted information transmitted by a transmitter, wherein the scrambled to-be-transmitted information is to-be-transmitted information scrambled by the transmitter according to a pseudo random binary sequence generated by a sequence generator, and the pseudo random binary sequence is generated by the transmitter by initializing the sequence generator according to a synchronization source ID, a group ID, and a timeslot number; and
a descrambling module, configured to descramble the scrambled to-be-transmitted information transmitted by the transmitter.

8. An information transmission method, applied to a transmitter, wherein the transmitter supports device to device D2D, and the method comprises:
initializing a sequence generator according to a synchronization source ID, a group ID, and a timeslot number;
scrambling to-be-transmitted information according to a pseudo random binary sequence generated by the sequence generator; and
transmitting scrambled to-be-transmitted information.

9. The method according to claim 8, wherein the initializing a sequence generator according to a synchronization source ID, a group ID, and a timeslot number comprises:
acquiring a first initial value cᵢₙᵢₜ₁ according to cᵢₙᵢₜ₁ =n*_{groupID}*.2*^{A}* +*q*.2*^{B}* + └n*ₛ*/2┘.2*^{C}* + *N_{sID}*, wherein n_{groupID} is the group ID, q is a sequence number of a codeword, nₛ is the timeslot number, N_{sID} is the synchronization source ID, and A, B and C are all positive integers; and
initializing the sequence generator by using the first initial value cᵢₙᵢₜ₁.

10. The method according to claim 9, wherein a value of a bit of the codeword is constantly 1.

11. An information transmission method, applied to a transmitter, wherein the transmitter supports device to device D2D, and the method comprises:
initializing a sequence generator according to service ID information and a timeslot number;
scrambling to-be-transmitted information according to a pseudo random binary sequence generated by the sequence generator; and
transmitting scrambled to-be-transmitted information.

12. The method according to claim 11, wherein the D2D is in a broadcast mode, and the service ID information is acquired from a preset service ID information set, or the service ID information is acquired from a service ID information set broadcasted by a base station.

13. The method according to claim 11 or 12, wherein the D2D is in the broadcast mode, and the initializing a sequence generator according to service ID information and a timeslot number comprises:
acquiring a second initial value cᵢₙᵢₜ₂ according to *c*ᵢₙᵢₜ₂ = └n*ₛ*/2┘.2*^{D}* + *N_{D2D}*, wherein nₛ is the timeslot number, N_{D2D} is the service ID information, and D is a positive integer; and
initializing the sequence generator by using the second initial value cᵢₙᵢₜ₂.

14. An information transmission method, applied to a receiver, wherein the receiver supports device to device D2D, and the method comprises:
receiving scrambled to-be-transmitted information transmitted by a transmitter, wherein the scrambled to-be-transmitted information is to-be-transmitted information scrambled by the transmitter according to a pseudo random binary sequence generated by a sequence generator, and the pseudo random binary sequence is generated by the transmitter by initializing the sequence generator according to a synchronization source ID, a group ID, and a timeslot number; and
descrambling the scrambled to-be-transmitted information transmitted by the transmitter.
